# EUROPEAN PATENT SPECIFICATION

(11) **EP 1 053 611 B1**
(45) Date of publication and mention of the grant of the patent: **23.07.2003**
(21) Application number: 99903950.6
(22) Date of filing: 29.01.1999
(51) Int. Cl.: H04J 3/16

(54) **INVERSE MULTIPLEXING OVER EXISTING TELEPHONY ACCESS LINES**
INVERSES MULTIPLEXEN ÜBER BESTEHENDE TELEFONANSCHLUSSVERBINDUNGEN
MULTIPLEXAGE INVERSE SUR DES LIGNES D'ACCES TELEPHONIQUES EXISTANTES

(30) Priority: 02.02.1998 NO 980451
(43) Date of publication of application: 22.11.2000
(73) Proprietor: inAxxess as, 0580 Oslo (NO)
(72) Inventor: EDVARDSEN, Einar, N-1990 S rum (NO); ORMHAUG, Terje, Edvard, N-2013 Skjetten (NO)
(74) Representative: Harrison, Michael Charles
(86) International application number: NO9900024
(87) International publication number: WO99039468

(56) References cited:
- WO-A1-93/07727
- WO-A1-96/17489
- GB-A- 2 308 526
- IEEE COMMUNICATIONS MAGAZINE, April 1994, PAUL H. FREDETTE, "The Past, Present and Future of Inverse Multiplexing".
- Einar Edvardsen: ATM to the Home. In: ATM Developments '97, 25-27 March 1997

## Description

The present invention relates to a method and means for implementing broadband digital communication between subscribers and an exchange via an existing copper cable network. The invention utilizes a network concept that still depends upon the same local area telephone cables, but has a structure and contains new network elements that increases its capacity sufficiently to offer real broadband access to the general public.

One of the main obstacles on the road towards a telecommunication network able to offer real broadband services to the general public, is the access network. A public broadband network should be able to provide at least 20 Mb/s to each subscriber. Today, only optical fibre cables have been looked upon as having sufficient capacity to serve such a network. However, the cost of establishing a new optical network covering a whole country, is enormous, and much effort is therefore spent to find alternative and intermediate solutions for a smooth upgrade of existing networks. One of these networks could be the local area telephone network.

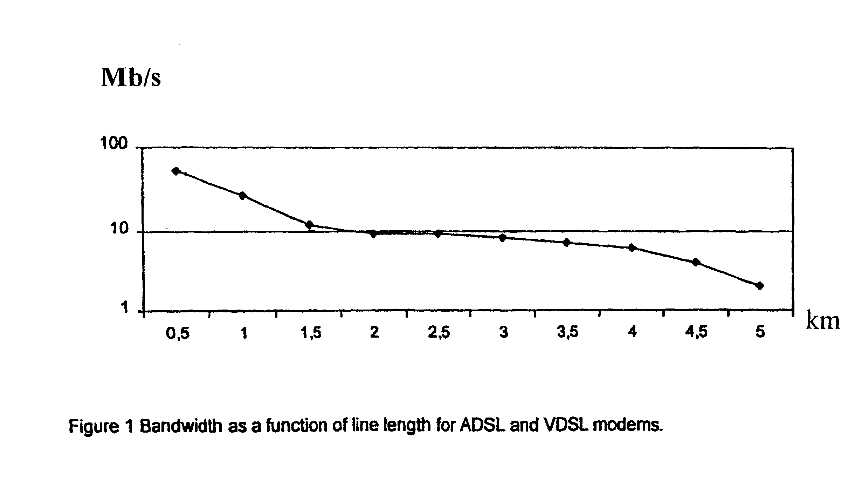

The local area telephone network consists of twisted pair cables. Each telephone subscriber in this network has one copper pair which connects his telephone unit to the telephone exchange. Originally these copper pairs were dimensioned to carry analogue telephone traffic with an analogue bandwidth of 3,1 kHz. With the introduction of digital telephony, ISDN, this network is being upgraded to carry 144 kb/s. However, this may be further improved. DSL (Digital Subscriber Line) technology is today a well known technology for digital transmission via copper wire (telephone cables) in the telephone communications field. Using the most recent technology, e.g. VDSL (Very high bitrate DSL) and ADSL (Asymmetrical DSL), the copper pairs are now able to carry up to 52 Mb/s, but the bit rate is strongly dependent on the distance - see figure 1. The graph indicates the obtainable bandwidth as a function of distance, when following recommendations from ETSI and ADSL Forum.

Though 52 Mb/s may look impressive, it is only relevant over very short distances - a few hundred meters, and therefore not really interesting. At distances of 5-6 kilometres the achievable bandwidth is only in the range of 1 Mb/s, and definitely not sufficient for a future broadband network, that may require 20-50 Mb/s for a ordinary household, to support services like high quality picture telephony, TV via telephone line. Video-on-Demand etc. Since one cannot expect to improve the modulation and coding technology much further, it is unrealistic that **traditional** use of DSL technology can serve as a technology for the future broadband network. The performance of such a technology is today not far from the theoretical limits for the transmission capacity of copper pairs.

The limitation of the traditional use of DSL technology is due to the following:
1. The local line lengths in the telephone network are too long to achieve bandwidths in the range of 25-50 Mb/s.
2. Each subscriber occupies one (or more) physical copper pair all the time whether he uses it or not. Consequently, the line, or the unused portion of its total capacity, cannot be offered to other users, since each copper pair is exclusively allocated to the single users. This leads to a gigantic waste of bandwidth.

This invention relates to a strategy and related technology for how to utilize the existing twisted pair cable network to provide broadband access to the general public. Following this scheme, each of today's telephone subscribers can be offered access to a network with near unlimited bandwidth. In the following, a range of 25-50 Mb/s is used to illustrate the bandwidth offered to each household, but in principle even more bandwidth can be offered.

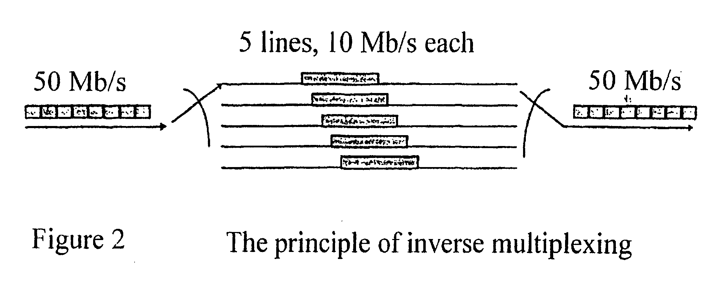

**Inverse multiplexing** is a well known concept within the telecommunications field. This technology makes it possible to combine a number of narrow-band channels or lines, to an aggregated broadband channel. With e.g. 5 lines, each line having a bit rate of 10 Mb/s, inverse multiplexing of these 5 lines will provide a common transmission pipe line with a total bandwidth of 50 Mb/s. The users will not notice that the physical line system consists of 5 separate lines. Figure 2 shows a schematic illustration of the inverse multiplexing principle:

The incoming traffic, sub-divided into information units, e.g. bits, bytes, cells, packets etc., from the left is equally distributed over the 5 lines in sequential order (round robin order). On the receiving (right) side the traffic is restored by reading the five lines in the same sequential order. Inverse multiplexing methods using current standards, demand that the five lines are running synchronously or plesiochronously, i.e. have synchronous or near synchronous bit rates. Differences in speed over time will result in bit or cell loss. If the hit rate of one line is different from the other line bit rates, say one line being 11 Mb/s and the others being 10 Mb/s, information will be lost.

Previously known inverse multiplexers are standardised by various standardising authorities, like e.g. ITU, ETSI, ATMF and others. A common feature of these standards is that they are adapted to digital channels compliant with the PDH (Plesiochronous Digital Hierarchy) or SDH/SONET (Synchronous Digital Hierarchy/Synchronous Optical NETwork) hierarchies, for instance E1/DS1 (2.048/1.544 Mb/s). Even in the case of inverse multiplexing over ATM as defined in ATM Forum (af-phy-0086.000), the recommendation only covers inverse multiplexing of ATM cells over E1/DS1 channels, though ATM is a rate independent transmission format. If the transmission format does not comply with these standards, or the lines are adapted to various standards, so that the transmission rate varies from line to line, standardised inverse multiplexing cannot be used.

The previously mentioned DSL technology is a common concept for a plurality of new coding and modulation methods utilized in connection with the transmission of data via copper wire (telephone cables). One characteristic feature of some of these systems is that the transmission rate is automatically adapted to line length, cable characteristics and noise conditions. Due to this feature, parallel systems may have different transmission rates even when the line lengths are identical. Besides, the transmission rates do not follow the hierarchical steps of PDH/SDH. ADSL (Asymmetric DSL) is a variant that e.g. may have a performance of up to 8 Mb/s over a line length of 2-3 km. Cable line length and noise conditions have the effect that the actual transmission rate may have any value between 0 and 8 Mb/s. In order to utilize this capacity in an efficient manner. ATM is often used as a transmission protocol:

ATM (Asynchronous Transfer Mode) is a technology for transmission of digital signals. The main principle is that the digital information is divided into small data packets - ATM cells. Every cell has a header containing address information regarding where the cell is to be sent, and other parameters informing about traffic type, quality requirements etc. The principle is similar to packet switching of data, e.g. as done by the IP protocol, but much faster because of simplified processing. ATM is expected to be a dominating technology in future telecommunication.

As previously mentioned, there are no standards enabling inverse multiplexing of channels having different bandwidths. The inverse multiplexing can only be executed if the bandwidth is adapted to one of the standardised levels in the transmission hierarchy. As an example, if the maximum physical transmission rate is 3,9 Mb/s, a usable rate must be found by lowering to the closest level in the hierarchy, that is 2,048 Mb/s. A number of such channels of 2,048 Mb/s can then be inverse multiplexed to form a collective and larger bandwidth. Inverse multiplexing of 4 such channels will result in 8,192 Mb/s, while theoretically it would be 4 x 3,9 = 15,6 Mb/s.

GB-A-2 308 526 describes a multimedia communications system in which user premises may communicate to each other through a multimedia central office and the public digital telephone network. The user premises may be connected to the multimedia central office by unshielded twisted pair (UTP) links which can be operated in UTP space division in order to increase the bandwidth available for each user premise. The multimedia central office is connected via dedicated or switched digital carriers to the digital telephone network.

WO-A-93 07727 discloses a video teleconferencing system which uses dialling inverse multiplexers. To establish a teleconference session as many dial-up connections as necessary must first be established between the users. The connections are then served by the inverse multiplexers in order to achieve the necessary bandwidth.

Thus, the present invention has been conceived in order to solve the problem of providing high bit rate communication to subscribers via an existing copper wire/cable system.

In accordance with a first aspect of the invention, there is provided a method for implementing digital broadband communications between subscribers and an exchange via a telecommunication network based upon an older existing telephone network having cables containing twisted copper wire pairs and having node means each connecting a higher level cable to a number of next lower level cables, or to a number of single subscriber twisted pairs (lowest level). The method is characterised in that at least some twisted pairs in a cable are used as a common communication channel for subscribers connected to that cable, utilising an aggregated bandwidth for said at least some twisted pairs in the cable.

In accordance with a second aspect of the invention, there is provided a digital broadband communication network between subscribers and an exchange, said network being based upon an older existing telephone network and comprising cables containing twisted copper wire pairs, possibly with different bandwidths, and further comprising node means each interconnecting a higher level cable and a number of next lower level cables, or a number of single subscriber twisted pairs (lowest level). The network of the invention is characterised in that between said exchange and the top level node means, and between node means in successive levels, at least some twisted pairs in a cable constitute a common communication channel for every subscriber connected to that cable, by means of node means equipment for utilizing bandwidth that is an aggregate of the separate bandwidths for each respective one of said at least some pairs in the cable.

In accordance with a third aspect of the invention, there is provided a digital broadband communication network node for upgrading an existing telephone network between subscribers and an exchange, said network comprising cables containing twisted copper wire pairs possibly having different hit rates. The node of the invention is characterized in that it comprises
- an inverse multiplexer means for distributing traffic between at least some twisted pair lines in a cable toward a higher level node, to utilize aggregated bandwidth for the collection of said at least some lines.
- a concentrator means including a statistical multiplexer means for allowing the use of one common wideband communication channel by providing one multiplexed data stream, and
- possibly further inverse multiplexer means for distributing traffic between at least some twisted pair lines in cables toward other nodes, to utilize aggregated bandwidths for the collections of lines.

A fourth aspect of the invention consists in a use of an inverse multiplexing means for distributing an incoming stream of consecutive data between a number of parallel outgoing communication lines in a cable in a digital communication network, thereby to aggregate bandwidth from said parallel lines. The inventive use is in a node in an existing local area telephone network based on cables containing multiple twisted copper pair lines, where the lines connected to said inverse multiplexing means possibly have different bit transmission rates.

Thus, the invention describes a network architecture where all copper pairs can be used as a common pool of bandwidth, accessible to all subscribers. Inverse multiplexing (IM) is used to aggregate the bandwidth from a number of lines, to form a large bandwidth equal to the sum of each separate line. ATM is used as the transmission format to enable easy statistical multiplexing.

In the following, the invention will he described in closer detail by means of embodiment examples, and with reference to the appended drawings, where
fig. 1 shows bandwidth as a function of line length for ADSL and VDSL modems,
fig. 2 explains the general principle of inverse multiplexing.
fig. 3 shows the conversion of an existing telephone network to a broadband network by implementing the present invention.
fig. 4 shows schematically inverse multiplexing of ATM cells onto lines having different transfer bit rates, in accordance with an embodiment of the invention.
fig. 5 shows a form of ATM inverse multiplexing in accordance with another embodiment of the invention.

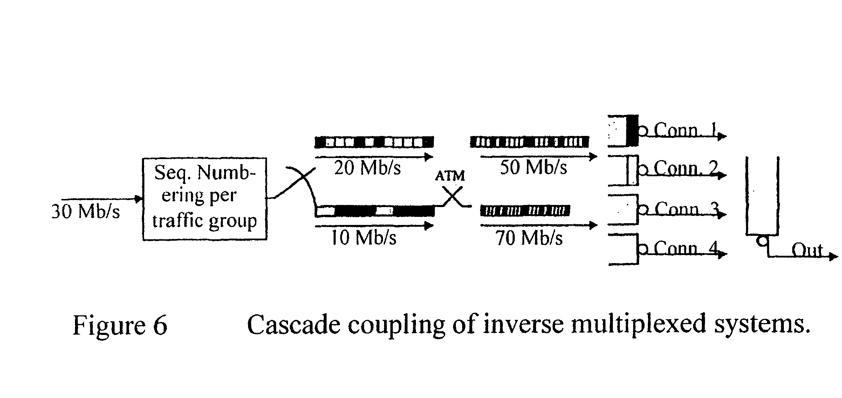

fig. 6 shows a scheme for cascade coupling of inverse multiplex systems.
fig. 7 shows a method of inverse multiplexing in accordance with yet another embodiment of the invention, and
fig. 8 shows a network node containing an inverse multiplexer that is used in accordance with the invention.

As stated above, the present invention relies on a network concept based upon the use of an existing local area telephone network, where the old telephone cables are integrated into the new access network in such a way that the aggregated bandwidth from many twisted pairs can be utilized as a common capacity for the subscribers. Furthermore, inverse multiplexing of multiple DSL systems running at different speeds is used to aggregate bandwidth that can be used between network nodes.

Various inverse multiplexing methods can be applied, and such methods will be investigated herebelow.

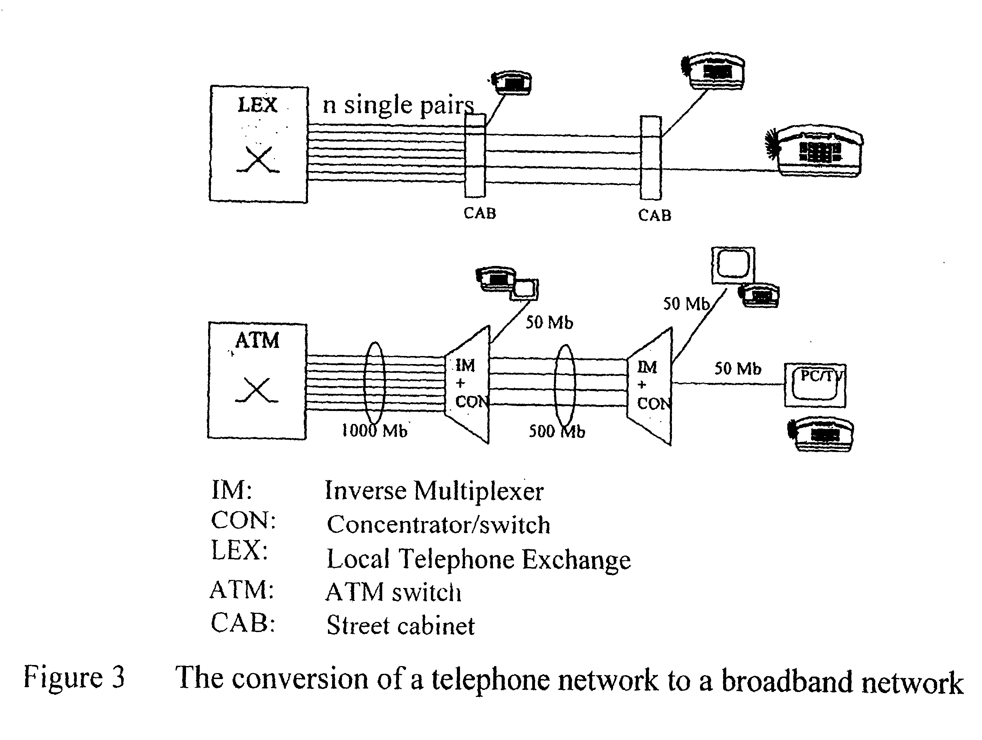

However, first it is opportune to look into the general manner of converting the old existing local telephone network into a broadband network, with reference to fig. 3:

The upper part of fig. 3 shows the main structure of the local telephone network. Each telephone unit is connected to a copper pair, which is crossconnected through street cabinets (CAB) and to the local telephone exchange (LEX).

The lower part of fig. 3 shows the principle structure of the upgraded network. Combined inverse multiplexers and concentrators (IM + CON) are installed at the locations of the street cabinets to constitute new network nodes. The IMs transform a number of copper pairs (with limited bandwidth) into a huge, combined communication capacity. which can be utilizedd as a common resource for all the users. The CONs perform the concentrator function, i.e. they perform the statistical multiplexer function needed to allow a number of users to share a common resource.

Compared to the old network, the new one is radically improved. As mentioned above, the old network can hardly offer broadband capacity - only in the range of 0,5 - 8 Mb/s. The new network will be able to offer more or less unlimited "bandwidth on demand" to each household. The bandwidth is only restricted by the length of the last section (from the closest node to the subscriber), i.e. a length of a few hundred meters, over which 25 - 50 Mb/s can be offered when using standard VDSL technology. For those who need more than 25 - 50 Mb/s, optical fibres can be used on this section, thus enabling unlimited bandwidth access.

Since one twisted pair performs differently from another due to noise, cross talk and imperfect cable characteristics, it is important to introduce inverse multiplexing methods that are able to cope with lines running at different speed. Two general methods meeting this requirement shall be described herebelow. They are called:
a) Inverse Multiplexing of ATM over DSL by use of Sequence Numbering
b) Deterministic Inverse Multiplexing over DSL

### a) Inverse Multiplexing of ATM over DSL by use of Sequence Numbering

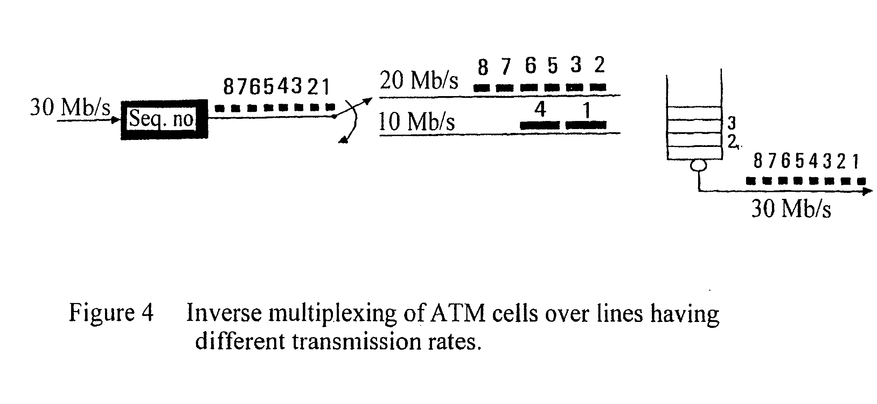

a1) With reference first to fig. 4, a first example is given of an efficient manner regarding inverse multiplexing of line systems having different transmission bit rates:

This method is based on sequence numbering. A sequence number is added to each respective incoming data cell from the left, and thereafter the data cell is transmitted via the line giving the shortest transfer time at the actual time. A sequence number is transmitted either as a "tag" that is added to a standard data packet (ATM cell), or by utilising any "free" field in the packet header. The use of sequence numbering can be regarded as inherent in the system, and therefore adding a tag to a standard ATM cell will not create any compatibility problem.

In the receiving end the sequence numbering is checked, and if the cells arrive in an order that is incorrect, they are stored intermediately (buffered) in order to reestablish the correct order. In the example shown in fig. 4, there is an indication that cells numbers 2 and 3 arrive earlier than cell number 1, which means that delay is introduced in the system. Inverse multiplexed systems following this scheme, are exposed to delay and cell delay variation (CDV) when the included lines are running at different speed, due to the different cell transfer times. One ATM cell transferred at 10 Mb/s takes about 0.042 ms, while the transfer time at 1 Mb/s is about 0,42 ms. Consequently, by including one low speed line (1 Mb/s) among other high speed lines (10 Mb/s), one introduces CDV with peak values at about 0,42 ms.

Delay and CDV are limiting factors in this kind of inverse multiplexed systems. A number of telecommunication services pose strict requirements regarding delay and CDV, while others do not. Telephony is one of the time critical services that pose strong requirements to delay and CDV. A common notation for these time critical services is real time services. Conventional data services are among those which are non-critical in this regard, and are called 'non-real time services'. Both in ITU and ATM Forum, a number of such service classes are defined. Some of these classes can strictly be characterised as real time services, while others fall into the category of non-real time services. Others again are a mixture, for instance those which are sensitive to CDV, but not to delay, and vice versa.

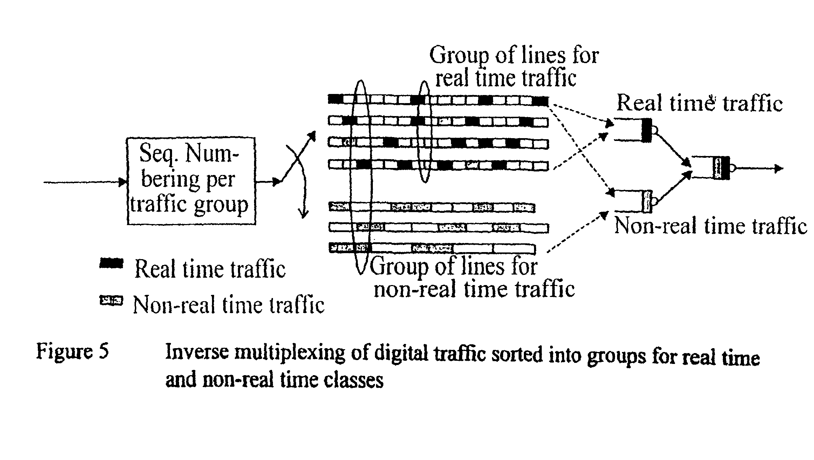

a2) To solve the problem of CDV, the inverse multiplexing method can be modified as shown in Figure 5. Following this method, the incoming traffic is sorted into two groups, one for real time services and another for non-real time services. Each of them are given separate sequence number series. The real time traffic, with its own sequence numbering, is transmitted over a group of high performance lines having high bandwidth and more or less equal transfer rates. At the receiver end the real time traffic will be received and stored into a separate receiver buffer before being further transmitted onto the common line.

Real time traffic treated as described above, will not be exposed to CDV. The inverse multiplexer is in this way able to meet the requirement posed by this type of traffic, but on the cost of increased complexity of the equipment.

Non-real time traffic is not sensitive to CDV, and may be transmitted over any included line of the inverse multiplexer - also over lines reserved for the real time traffic. In the latter case real time traffic will always have priority over non-real time traffic. Consequently it will only happen when the real time traffic does not use the available bandwidth of the reserved lines.

In principle this inverse multiplexer scheme can be further optimised by subdividing the traffic into more classes, and by treating each class separately. To meet the various requirements of the different traffic classes, line groups that match their requirements are allocated to them.

Inverse multiplexing following the methods of sequence numbering of cells (or packets) is exposed to a certain degree of transfer delay. This is due to the processing of complete cells. An ATM cell consists of 424 bits, and the transfer time of one cell is therefore 424 times longer than the transfer of one bit. Storing cells into buffers may therefore create unacceptable delay in the system. The method explained under b) Deterministic Inverse Multiplexsing over DSL intends to solve the problem of delay.

### b) Deterministic Inverse Multiplexing over DSL

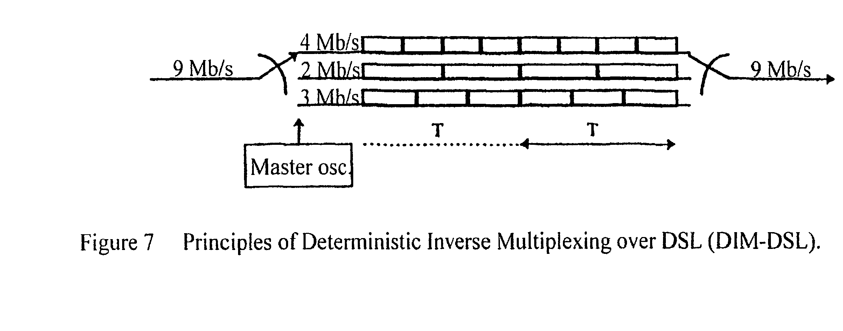

Fig. 7 shows the principle of DIM-DSL. As an example, the three physical lines included in the inverse multiplexer may carry respectively 4, 2 and 3 Mb/s. The incoming bits (bytes or cells) are then distributed to the three lines in a fixed relation that fits the speed of each line. In the example shown, it is possible to transfer 4 bits over the upper line, 2 bits over the second line and 3 bits over the lower line during the same period of time (T).

The exact frequency relationship between the transfer rates of the three lines is assured by a common master oscillator on the transmitting side (left side) of the system.

At the receiving side (right side) the bits (bytes or cells) are received in the same sequence order, i.e. during the same period T. 4 bits are received from the upper line, 2 from the second line and 3 from the lower line, and stored in a receiver buffer. The aggregated bandwidth of the three lines are 9 Mb/s, and the three buffers are emptied during the following time interval T, i.e. 4 bits are first read from the upper line buffer and transmitted, then 2 and 3 bits from the two remaining lines.

Since the receiver does not know when to start time interval T, there must be a mechanism that takes care of synchronizing the receiver to the received signals. When the signal has an ATM format, one can use standard ATM cell detection schemes, i.e. HEC (Header Error Correction) detection. HEC is byte number 5 of the five bytes in the ATM header that contains a control byte for the ATM header. When the received HEC byte does not comply with the HEC calculation of the 4 remaining header bytes, the cell is not accepted. The HEC calculation is used to detect the start of ATM cells.

The HEC detection mechanism can be extended to also include the above synchronisation of the receiver. When starting the receiver at random time, the receiver and transmitter will be phase shifted. This means for example (figure 7) that instead of reading bit 1, 2, 3 and 4 from period T of the upper line, it may read bit 3 and 4 from time period T followed by bit 1 and 2 in the consecutive period T. Since the 4 bits in this way will be received out of order, the HEC calculation will be wrong. The synchronisation algorithm then responds by shifting T a certain interval followed by a new attempt of re-calculation. This procedure continues until the transmitter and receiver run synchronously, and data is received correctly.

Deterministic inverse multiplexing will most probably not be cell-based because it creates too much delay. The best performance will be achieved when distributing groups of bits to each included line relative to their bit rates. As mentioned before, doing the same with cells would create 424 times more delay.

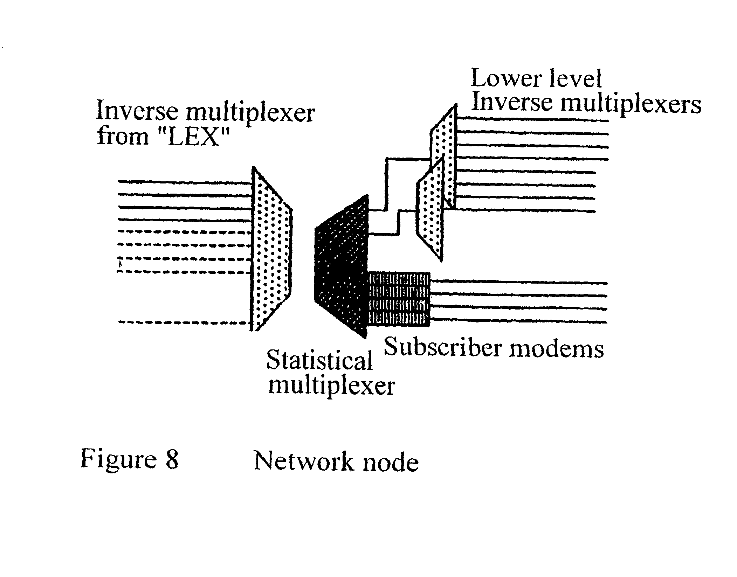

The new network concept requests network nodes that integrate switching and inverse multiplexing in an efficient way. Such equipment is not yet commercially available. A block diagram illustration of an embodiment of a network node containing an inverse multiplexer to be used in accordance with the invention, is shown in fig. 8. Such a network node is able to switch digital information in both directions between multiple groups of subscriber lines carrying inverse multiplexed traffic and between such inverse multiplexed systems and individual digital subscriber lines. Further, the node, when intermediate between inverse multiplexed systems, will not reassemble inverse multiplexed traffic that follows the method of sequence numbering. The reassembling only needs to be done at the "outer boarder of the inverse multiplexer system", i.e. on the interface towards other equipment such as ATM switches, subscriber modems, etc. By avoiding multiple reassembling, delay and CDV will decrease, and equipment cost will be lower.

Since Deterministic Inverse Multiplexing most probably will be bit-oriented, it will behave as an end-to-end transmission system, and there will only be minor advantages to be gained by integrating this type of inverse multiplexing into the other functions of the node.

Figure 8 shows a schematic description of a network node. The node consists of an inverse multiplexer towards the LEX-side, and two towards other nodes in the network. Subscribers located near the node are connected to the node with subscriber modems, for instance VDSL modems. The central point of the node is a statistical multiplexer that multiplexes/demultiplexes all traffic to and from subscribers and other nodes in the network and into the inverse multiplexer going further into the network.

To summarize, the present invention relates to a network concept based upon the existing local area telephone network where the old telephone cables are integrated into the access network in such a way that the aggregated bandwidth from all the twisted pairs can he utilized as a common capacity for the subscribers. The local area telephone network is sub-divided into small geographical cells, each geographical cell containing functions performing statistical multiplexing and intertacing towards other cells and end-users. Multiple twisted pairs serve as transmission links between the nodes. Advanced coding and modulation technology, for instance similar technology as the one used for ADSL, VDSL etc., is used to derive the highest possible bandwidth from each twisted pair, and the obtained bandwidth from any single line may differ from the bandwidth of another line.

Though inverse multiplexing of ADSL is known, standards do still not exist regarding how to implement a multiplexing algorithm on such equipment. ADSL and VDSL modems have originally been developed to increase the bandwidth to individual subscribers, and so is the case with the known approaches to inverse multiplexing of ADSL. Use of DSL technology in combination with inverse multiplexing to establish a new broadband network structure is unknown from publications of any kind.

In the network concept in accordance with the invention, inverse multiplexing of DSLs is used to form a large bandwidth between new established nodes in the network. DSL technology and inverse multiplexing in network elements are used to serve the above network concept. Various methods of inverse multiplexing are used to aggregate bandwidth from each single line to form a large common accessible bandwidth.

In one embodiment, the digital information is distributed all over the inverse multiplexed lines in the same ratio as determined by the bit rates of the included lines, and reassembled at the receiver end following the same algorithms. A common master oscillator is used, to ensure exact and stable phase relationship between the lines.

In another embodiment, the digital information is sequence numbered and sent to the digital subscriber line that at the particular instant has the shortest transmission delay within the group to be inverse multiplexed, and reassembled at the receiver end. Sequence numbers are attached to the information packet, or within the packet in cases where such fields are available.

## Claims

1. A method for implementing digital broadband communications between subscribers and an exchange via a telecommunication network based upon an older existing telephone network having cables containing twisted copper wire pairs and having node means (CAB) each connecting a higher level cable to a number of next lower level cables, or to a number of single subscriber twisted pairs (lowest level),
**characterized in that** at least some twisted pairs in a cable are used as a common communication channel for subscribers connected to that cable, utilizing an aggregated bandwidth for said at least some twisted pairs in the cable, by using inverse multiplexer (IM) means, as a common resource for subscribers, in each of the node means (CAB).

2. The method of claim 1,
**characterized in that** the largest possible bandwidth is provided for each single twisted pair in use in every cable by utilization of advanced coding and modulation equipment in the node means and exchange, e.g. of the type as standardised and described for ADSL, VDSL, HDSL or similar modems.

3. The method of claims 1 or 2,
**characterized in that** incoming data cells are sequence numbered in a node means and transmitted to the twisted pair that at the actual moment has the shortest transmission delay, and re-ordered in a receiving node means according to sequence number.

4. The method of claim 3,
**characterized in that** sequence numbering is performed in series allocated to further specified groups of cell streams.

5. The method of claim 4,
**characterized in that** sequence numbering is performed in series allocated to groups of traffic defined by performance requirements they pose to said node means.

6. The method of claim 4,
**characterized in that** sequence numbering is performed in series allocated to the total traffic entering said node means.

7. The method of claims 1 or 2,
**characterized in that** incoming traffic in suitable units, is distributed sequentially between the twisted pair lines in use in the cable in the same exact ratio as determined by the bit rates determined for the included lines, the cell stream being re-established in a receiving node means by sequential reading of the same fixed number of units as sent into each line.

8. A digital broadband communication network between subscribers and an exchange (LEX, ATM), said network being based upon an older existing telephone network and comprising cables containing twisted copper wire pairs, possibly with different bandwidths, and further comprising node means (CAB) each connecting a higher level cable to a number of next lower level cables, or to a number of single subscriber twisted pairs (lowest level),
**characterized in that** between said exchange (LEX, ATM) and the top level node means, and between node means (CAB) in successive levels, at least some twisted pairs in a cable constitute a common communication channel for every subscriber connected to that cable, by means of inverse multiplexer means (IM), in the node means (CAB) for utilizing bandwidth that is an aggregate of the separate bandwidths for each respective one of said at least some pairs in the cable.

9. The network of claim 8,
**characterized in that** said node means is adapted to perform statistical multiplexing and interfacing between the various levels.

10. The network of claim 8,
**characterized in that** said node means comprise means for sequence numbering of data cells and means for selecting an appropriate twisted pair within a predefined group in a cable, for transmission of a sequence numbered data cell, as well as means for re-ordering data cells received via a cable in accordance with the sequence numbering.

11. The network of claim 10,
**characterized in that** said sequence numbering means are adapted to perform sequence numbering in series allocated to further specified groups of cell streams.

12. The network of claim 11,
**characterized in that** said sequence numbering means are adapted to perform sequence numbering in series allocated to groups of traffic defined by performance requirements posed by said groups to said node means.

13. The network of claim 10,
**characterized in that** said sequence numbering means are adapted to perform sequence numbering in series allocated to the total traffic entering a node means.

14. The network of claim 8,
**characterized in that** a node means comprises means for sequential distribution of incoming traffic by suitable data units, between the twisted pair lines in use in the cable in the same exact ratio as determined by the bit rates determined for the included lines, and that a receiving node means comprises means for re-establishing said traffic by sequential reading of the same fixed number of data units as sent into each line.

15. A digital broadband communication network node for upgrading an existing telephone network between subscribers and an exchange, said network comprising cables containing twisted copper wire pairs, and means for deriving maximum and possibly various bit rates from each pair,
**characterized in that** it comprises
- an inverse multiplexer means for distributing traffic between at least some twisted pair lines in a cable toward a higher level node, to utilize aggregated bandwidth for the collection of said at least some lines,
- a statistical multiplexer means for allowing a number of communication channels to share one common wideband channel, and
- possibly further inverse multiplexer means for distributing traffic between at least some twisted pair lines in cables toward other nodes, to utilize aggregated bandwidths for the collections of lines.

16. Use of an inverse multiplexing means for distributing an incoming stream of consecutive data between a number of parallel outgoing communication lines in a cable in a digital communication network, thereby to aggregate bandwidth from said parallel lines, in a node in an existing local area telephone network based on cables containing multiple twisted copper pair lines, the lines connected to said inverse multiplexing means possibly having different bit transmission rates.

17. Use of an inverse multiplexing means as claimed in claim 16, wherein said node is equipped with means deriving maximum bandwidth from each line.

## Patentansprüche

1. Verfahren zur Durchführung digitaler Breitband-Kommunikation zwischen Teilnehmern und einer Vermittlungsstelle mittels eines Fernmeldenetzes, das auf einem bestehenden Telefonnetz basiert, das verdrillte Kupfer-Aderpaare beinhaltende Kabel aufweist, sowie Knotenmittel (CAB), die jeweils ein Kabel höherer Ebene mit einer Anzahl von Kabeln nächst-niedrigerer Ebene oder mit einer Anzahl verdrillter Aderpaare von Einzelteilnehmern (niedrigste Ebene) verbinden,
**dadurch gekennzeichnet, daß** wenigstens einige verdrillte Aderpaare in einem Kabel als gemeinsamer Kommunikationskanal für Teilnehmer benutzt werden, die mit diesem Kabel verbunden sind, wobei eine aggregierte Bandbreite für die wenigstens einigen verdrillten Aderpaare im Kabel genutzt wird, indem in jedem der Knotenmittel (CAB) Invers-Multiplexer-Mittel (IM) als gemeinsame Betriebsmittel für Teilnehmer benutzt werden.

2. Verfahren nach Anspruch 1,
**dadurch gekennzeichnet, daß** für jedes einzelne in jedem Kabel in Benutzung befindliche verdrillte Aderpaar die größtmögliche Bandbreite bereitgestellt wird, indem in den Knotenmitteln und der Vermittlungsstelle Ausstattungen für Advanced Coding und Modulation genutzt werden, beispielsweise des Typs, wie er standardisiert und beschrieben ist für ADSL, VDSL, HDSL oder ähnliche Modems.

3. Verfahren nach Anspruch 1 oder 2,
**dadurch gekennzeichnet, daß** eingehende Datenzellen in einem Knotenmittel sequenznummeriert werden, zu dem verdrillten Aderpaar übermittelt werden, das momentan die kürzeste Transmissionslaufzeit aufweist und in einem Empfangsknotenmittel entsprechend ihrer Sequenznummern neu geordnet werden.

4. Verfahren nach Anspruch 3,
**dadurch gekennzeichnet, daß** die Sequenznummerierung in Serien durchgeführt wird, die weiter spezifizierten Gruppen von Zellströmen zugeordnet sind.

5. Verfahren nach Anspruch 4,
**dadurch gekennzeichnet, daß** die Sequenznummerierung in Serien durchgeführt wird, die Verkehrsgruppen zugeordnet sind, die über die an das Knotenmittel gestellen Leistungsanforderungen definiert sind.

6. Verfahren nach Anspruch 4,
**dadurch gekennzeichnet, daß** die Sequenznummerierung in Serien durchgeführt wird, die dem gesamten Verkehr zugeordnet sind, der in das Knotenmittel eingeht.

7. Verfahren nach Anspruch 1 oder 2,
**dadurch gekennzeichnet, daß** der eingehende Verkehr in geeigneten Einheiten unter den im Kabel in Benutzung befindlichen Verdrillte-Aderpaar-Leitungen sequenziell verteilt wird, in exakt dem gleichen Verhältnis, das durch die für die einbezogenen Leitungen ermittelten Bit-Raten bestimmt wird, wobei der Zellstrom in einem Empfangsknotenmittel wiederhergestellt wird, indem sequenziell die gleiche fixe Anzahl von Einheiten ausgelesen wird, die in jede Leitung gesendet wurde.

8. Digitales Breitband-Kommunikationsnetzwerk zwischen Teilnehmern und einer Vermittlungsstelle (LEX, ATM), wobei das Netzwerk auf einem älteren, bestehenden Telefonnetz basiert und Kabel aufweist, die verdrillte Kupfer-Aderpaare mit möglicherweise unterschiedlichen Bandbreiten beinhalten, des weiteren Knotenmittel (CAB) aufweist, die jeweils ein Kabel höherer Ebene mit einer Anzahl von Kabeln nächstniedrigerer Ebene oder mit einer Anzahl verdrillter Aderpaare für Einzelteilnehmer (niedrigste Ebene) verbinden,
**dadurch gekennzeichnet, daß** zwischen der Vermittlungsstelle (LEX, ATM) und den Knotenmitteln höchster Ebene, sowie zwischen Knotenmitteln (CAB) aufeinander folgender Ebenen, wenigstens einige verdrillte Aderpaare in einem Kabel einen gemeinsamen Kommunikationskanal für jeden mit diesem Kabel verbundenen Teilnehmer darstellen, mittels Invers-Multiplexer-Mittel (IM) in den Knotenmitteln (CAB), um eine Bandbreite zu nutzen, die ein Aggregat der separaten Bandbreiten jeder einzelnen der wenigstens einigen Aderpaare im Kabel sind.

9. Netzwerk nach Anspruch 8,
**dadurch gekennzeichnet, daß** das Knotenmittel so ausgelegt ist, daß es statistisches Multiplexing und Interfacing zwischen den verschiedenen Ebenen durchführt.

10. Netwerk nach Anspruch 8,
**dadurch gekennzeichnet, daß** die Knotenmittel Mittel umfassen zur Sequenznummerierung von Datenzellen, sowie Mittel um ein geeignetes verdrilltes Aderpaar innerhalb einer vordefinierten Gruppe in einem Kabel für die Übertragung einer sequenznummerierten Datenzelle auszuwählen, sowie Mittel um die Datenzellen, die über ein Kabel empfangen wurden, in Übereinstimmung mit der Sequenznummerierung wieder zu ordnen.

11. Netzwerk nach Anspruch 10,
**dadurch gekennzeichnet, daß** die Sequenznummerierungsmittel so ausgelegt sind, daß sie eine Sequenznummerierung in Serien durchführen, die weiter spezifizierten Gruppen von Zellströmen zugeordnet sind.

12. Netzwerk nach Anspruch 11,
**dadurch gekennzeichnet, daß** die Sequenznummerierungsmittel so ausgelegt sind, daß sie eine Sequenznummerierung in Serien durchführen, die Verkehrsgruppen zugeordnet sind, die über die von den Gruppen an das Knotenmittel gestellten Leistungsanforderungen definiert sind.

13. Netzwerk nach Anspruch 10,
**dadurch gekennzeichnet, daß** die Sequenznummerierungsmittel so ausgelegt sind, daß sie eine Sequenznummerierung in Serien durchführen, die dem gesamten Verkehr zugeordnet sind, der in ein Knotenmittel eingeht.

14. Netzwerk nach Anspruch 8,
**dadurch gekennzeichnet, daß** ein Knotenmittel Mittel umfaßt, um eingehenden Verkehr durch geeignete Dateneinheiten unter den im Kabel in Benutzung befindlichen Verdrillte-Aderpaar-Leitungen sequenziell zu verteilen, in exakt dem gleichen Verhältnis, das durch die für die einbezogenen Leitungen ermittelten Bit-Raten bestimmt wird, und dadurch, daß ein Empfangsknotenmittel Mittel umfaßt um diesen Verkehr wiederherzustellen, indem sequenziell die gleiche fixe Anzahl von Dateneinheiten ausgelesen wird, die in jede Leitung gesendet wurde.

15. Knoten eines digitalen Breitband-Kommunikationsnetzwerks um ein bestehendes Telefonnetz zwischen Teilnehmern und einer Vermittlungsstelle aufzurüsten oder upzugraden, wobei das Netzwerk verdrillte Kupfer-Aderpaare beinhaltende Kabel umfaßt, sowie Mittel um die maximalen und möglicherweise verschiedenen Bit-Raten von jedem Paar abzuleiten,
**dadurch gekennzeichnet, daß** er umfaßt
- ein Invers-Multiplexer-Mittel um Verkehr zwischen wenigstens einigen Verdrillte-Aderpaar-Leitungen in einem Kabel, das zu einem Knoten höherer Ebene läuft zu verteilen, um eine aggregierte Bandbreite für diese Ansammlung von wenigstens einigen Leitungen zu nutzen,
- ein Statistischer-Multiplexer-Mittel um es einer Anzahl von Kommunikationskanälen zu ermöglichen, einen gemeinsamen Breitband-Kanal zu teilen, und
- möglicherweise weitere Invers-Multiplexer-Mittel um Verkehr zwischen wenigstens einigen Verdrillte-Aderpaar-Leitungen in Kabeln, die zu anderen Knoten laufen, zu verteilen, um aggregierte Bandbreiten für diese Ansammlungen von Leitungen zu nutzen.

16. Verwendung eines Invers-Multiplexer-Mittels, um einen eingehenden Strom folgender Daten zwischen einer Anzahl paralleler ausgehender Kommunikationsleitungen in einem Kabel in einem digitalen Kommunikationsnetzwerk zu verteilen, um dabei Bandbreiten der parallelen Leitungen zu aggregieren, in einem Knoten eines bestehenden lokalen Telefonnetzes, das auf mehrere Verdrillte-Kupfer-Aderpaar-Leitungen beinhaltenden Kabeln basiert, wobei die mit dem Invers-Multiplexer-Mittel verbundenen Leitungen möglicherweise unterschiedliche Bit-Übertragungsraten haben.

17. Verwendung eines Invers-Multiplexer-Mittels nach Anspruch 16, wobei der Knoten mit Mitteln ausgestattet ist, welche die maximale Bandbreite jeder Leitung ableiten.

## Revendications

1. Procédé pour mettre en oeuvre des communications numériques à large bande entre des abonnés et un centre téléphonique par l'intermédiaire d'un réseau de télécommunications basé sur un réseau téléphonique existant plus ancien ayant des câbles contenant des paires de fils de cuivre torsadées et ayant des moyens de noeud (CAB) connectant chacun un câble de niveau plus élevé à un certain nombre de câbles suivants de niveau inférieur ou à un certain nombre de paires torsadées d'abonné unique (de niveau le plus bas),
**caractérisé en ce que** qu'au moins quelques paires torsadées d'un câble sont utilisées comme canal de communication commun pour des abonnés raccordés à ce câble, en utilisant une largeur de bande totale pour lesdites au moins quelques paires torsadées du câble, en utilisant un moyen de multiplexeur inverse (IM) comme ressource commune pour des abonnés dans chacun des moyens de noeud (CAB).

2. Procédé selon la revendication 1,
**caractérisé en ce que** la plus grande largeur de bande possible est fournie pour chaque paire torsadée individuelle en service dans chaque câble en utilisant un codage avancé et un matériel de modulation dans les moyens de noeud et des modems de centre téléphonique, par exemple du type normalisé et décrit pour les normes ADSL, VDSL, HDSL ou similaires.

3. Procédé selon la revendications 1 ou 2,
**caractérisé en ce que** des cellules de données entrantes sont numérotées dans l'ordre dans un moyen de noeud et transmises à la paire torsadée qui a à cet instant le retard de communication le plus court et réordonnées dans un moyen de noeud de réception selon le numéro d'ordre.

4. Procédé selon la revendication 3,
**caractérisé en ce qu'**une numérotation dans l'ordre est exécutée dans des suites affectées à d'autres groupes spécifiés de flux de cellules.

5. Procédé selon la revendication 4,
**caractérisé en ce qu'**une numérotation dans l'ordre est exécutée dans des suites affectées à des groupes de trafic définis par des besoins de rendement qu'ils imposent auxdits moyens de noeud.

6. Procédé selon la revendication 4,
**caractérisé en ce qu'**une numérotation dans l'ordre est exécutée dans des suites affectées à tout le trafic entrant dans ledit moyen de noeud.

7. Procédé selon la revendications 1 ou 2,
**caractérisé en ce que** du trafic entrant en unités appropriées est distribué de façon ordonnée entre les lignes de paire torsadée en service dans le câble dans le même rapport exact que déterminé par les débits binaires déterminés pour les lignes comprises, le flux de cellule étant rétabli dans un moyen de noeud récepteur en lisant de façon ordonnée le même nombre fixé d'unités qu'envoyé dans chaque ligne.

8. Réseau de communication numérique à large bande entre des abonnés et un centre téléphonique (LEX, ATM), ledit réseau étant basé sur un réseau téléphonique existant plus ancien et comprenant des câbles contenant des paires de fil de cuivre torsadées, pouvant avoir différentes largeurs de bande, et comprenant de plus des moyens de noeud (CAB) connectant chacun un câble de niveau plus élevé à un certain nombre de câbles suivants de niveau inférieur ou à un certain nombre de paires torsadées d'abonné individuel (niveau le plus bas),
**caractérisé en ce qu'**entre ledit centre téléphonique (LEX, ATM) et les moyens de noeud de niveau le plus élevé et entre des moyens de noeud (CAB) dans des niveaux successifs, au moins quelques paires torsadées d'un câble constituent un canal de communication commun pour chaque abonné raccordé à ce câble, au moyen de moyens de multiplexeur inverse (IM) dans les moyens de noeud (CAB) pour utiliser une largeur de bande qui soit un total des largeurs de bande séparées pour chacune respective desdites au moins quelques paires du câble.

9. Réseau selon la revendication 8,
**caractérisé en ce que** lesdits moyens de noeud sont conçus pour exécuter un multiplexage statistique et réaliser une interface entre les différents niveaux.

10. Réseau selon la revendication 8,
**caractérisé en ce que** lesdits moyens de noeud comprennent des moyens pour numéroter dans l'ordre des cellules de données et des moyens pour choisir une paire torsadée appropriée à l'intérieur d'un groupe prédéfini d'un câble, pour la transmission d'une cellule de données numérotée dans l'ordre, ainsi que des moyens pour ré-ordonner des cellules de données reçues par l'intermédiaire d'un câble selon la numérotation dans l'ordre.

11. Réseau selon la revendication 10,
**caractérisé en ce que** lesdits moyens de numérotation dans l'ordre sont conçus pour exécuter une numérotation dans l'ordre sur des suites affectées à d'autres groupes spécifiés de flux de cellule.

12. Réseau selon la revendication 11,
**caractérisé en ce que** lesdits moyens de numérotation dans l'ordre sont conçus pour exécuter une numérotation dans l'ordre sur des suites affectées à des groupes de trafic définis par des besoins de rendement imposés par lesdits groupes auxdits moyens de noeud.

13. Réseau selon la revendication 10,
**caractérisé en ce que** lesdits moyens de numérotation dans l'ordre sont conçus pour exécuter une numérotation dans l'ordre sur des suites affectées à tout le trafic entrant dans un moyen noeud.

14. Réseau selon la revendication 8,
**caractérisé en ce qu'**un moyen de noeud comprend un moyen pour distribuer de façon ordonnée du trafic entrant par unités de données appropriées, entre les lignes de paire torsadée en service dans le câble dans le même rapport exact que déterminé par les débits binaires déterminés pour les lignes comprises et **en ce qu'**un moyen de noeud récepteur comprend un moyen pour rétablir ledit trafic en lisant dans l'ordre le même nombre fixé d'unités de données qu'envoyé dans chaque ligne.

15. Noeud de réseau de communication numérique à large bande pour améliorer un réseau téléphonique existant entre des abonnés et un centre téléphonique, ledit réseau comprenant des câbles contenant des paires de fil de cuivre torsadées et des moyens pour dériver des débits binaires maximum et divers au possible de chaque paire,
**caractérisé en ce qu'**il comprend
- un moyen de multiplexeur inverse pour distribuer le trafic entre au moins quelques lignes de paire torsadée d'un câble vers un noeud de niveau plus élevé, pour utiliser une largeur de bande totale pour la réunion desdites au moins quelques lignes,
- un moyen de multiplexeur statistique pour permettre à un certain nombre de canaux de communication de partager un canal à large bande commun, et
- le cas échéant un autre moyen de multiplexeur inverse pour distribuer le trafic entre au moins quelques lignes de paire torsadée dans des câbles vers d'autres noeuds, pour utiliser des largeurs de bande totales pour la réunion de lignes.

16. Utilisation d'un moyen de multiplexage inverse pour distribuer un flux entrant de données consécutives entre un certain nombre de lignes de communication sortantes parallèles d'un câble dans un réseau de communication numérique, pour totaliser ainsi la largeur de bande desdites lignes parallèles, dans un noeud d'un réseau téléphonique local existant basé sur des câbles contenant de multiples lignes de paire de cuivre torsadée, les lignes connectées audit moyen de multiplexage inverse pouvant avoir différents débits de transmission binaire.

17. Utilisation d'un moyen de multiplexage inverse selon la revendication 16, dans lequel ledit noeud est équipé d'un moyen dérivant une largeur de bande maximum de chaque ligne.
